# EUROPÄISCHE PATENTSCHRIFT

(11) **EP 3 736 095 B1**
(45) Veröffentlichungstag und Bekanntmachung des Hinweises auf die Patenterteilung: **31.07.2024**
(21) Anmeldenummer: 20170128.1
(22) Anmeldetag: 17.04.2020
(51) Int. Cl.: B27N 1/00, B27N 3/00, B27N 3/04, C08L 97/02

(54) **PLATTENFÖRMIGER WERKSTOFF UND VERFAHREN ZU DESSEN HERSTELLUNG**
BOARD-SHAPED MATERIAL AND METHOD FOR ITS MANUFACTURE
MATIÈRE SOUS FORME DE PLAQUE ET SON PROCÉDÉ DE FABRICATION

(30) Priorität: 18.04.2019 EP 19170159; 09.01.2020 WO PCT/EP2020/050451
(43) Veröffentlichungstag der Anmeldung: 11.11.2020
(73) Patentinhaber: SWISS KRONO Tec AG, 6004 Luzern (CH)
(72) Erfinder: BRAUN, Roger, 6130 Willisau (CH); HASCH, Joachim, 10317 Berlin (DE); SCHWIND, Volker, 10407 Berlin (DE)
(74) Vertreter: Kalkoff & Partner Patentanwälte mbB

(56) Entgegenhaltungen:
- EP-A1- 3 421 200
- WO-A1-2011/107900
- WO-A1-2016/071007
- DE-A1- 102007 041 438
- US-A1- 2008 234 423
- US-A1- 2013 085 211
- US-A1- 2017 190 156

## Beschreibung

Die Erfindung betrifft einen plattenförmigen Werkstoff und ein Verfahren zu dessen Herstellung sowie die Verwendung des plattenförmigen Werkstoffs.

Plattenförmige Werkstoffe aus lignocellulosischen Fasern werden vielfältig eingesetzt, weil ihre Herstellung preiswert und technisch ausgereift ist. Typisch ist z. B. der Einsatz von hochdichten Faserplatten (HDF), wobei Holzfasern unter Einsatz von Bindemitteln zu Platten verpresst werden, die anschließend meist beschichtet werden. In Gegenwart von Wasser beginnen an freiliegenden Kanten die Holzfasern infolge von Wasseraufnahme zu quellen, was zu einer Formänderung der Holzwerkstoffplatte führt. Als Wasser kann dabei entweder frei fließendes Wasser oder auch schon hohe Luftfeuchte gelten. Eine Quellung kann jedoch nicht vollständig reversibel gemacht werden, so dass nach einer ersten Quellung eine unschöne offene Fuge verbleibt. Plattenförmige Werkstoffe aus lignocellulosischen Fasern werden beschrieben in der WO 2016/071007 A1, in der WO 2011/107900 A1, in der DE 10 2007 041 438 A1, in der US 2017/190156 A1 und in der US 2008/0234423 A1.

Es ist Aufgabe der Erfindung, einen plattenförmigen Werkstoff und ein Verfahren zu seiner Herstellung bereitzustellen, der unter Nutzung von Fasern eine reduzierte Quellung aufweist.

Die Lösung dieser Aufgabe erfolgt durch ein Verfahren nach Anspruch 1 und einen plattenförmigen Holzwerkstoff nach Anspruch 8. Die Verwendung des plattenförmigen Werkstoffs nach der Erfindung ist in Anspruch 15 erfasst.

Die Erfindung betrifft einen plattenförmigen Werkstoff, aufweisend Fasern, Bindemittel und Füllstoff sowie optional einen elastifizierenden Zusatz, wobei der Anteil des Bindemittels und des Füllstoffs sowie des optionalen elastifizierenden Zusatzes, bezogen auf den plattenförmigen Werkstoff, mehr als 50 Gew.-% beträgt. Fasern im Sinne dieser Erfindung sind Feststoffpartikel, die langgestreckt sind, d. h., deren Durchmesser um ein Vielfaches geringer ist als die längste Dimension des Partikels. Der Durchmesser der Fasern beträgt von 10 µm bis 5 mm, die Länge der Fasern von 0,05 mm bis 100 mm.

Der plattenförmige Werkstoff weist also einen größeren Anteil an Bindemittel und Füllstoff sowie optional elastifizierendem Zusatz als an Fasern auf. Der Bindemittel- bzw. Füllstoffanteil und auch der Anteil des optional zugesetzten elastifizierenden Zusatzes kann auch bezogen auf Fasern ausgedrückt werden, das heißt, der Anteil des Bindemittels wird angegeben mit Bezug auf das Gewicht der eingesetzten Fasern. Bei hygroskopischen Fasern, die Feuchtigkeit aufnehmen können (z. B. lignocellulosische Fasern), wird der Anteil der Fasern als bis zur Gewichtskonstanz getrocknete Fasern angegeben, meist bei 105 °C bis zur Gewichtskonstanz getrocknete Fasern (atro Fasern: absolut trockene Fasern). Der Bindemittelanteil an dem plattenförmigen Werkstoff beträgt dann, bezogen auf den Anteil an Fasern, mehr als 100 Gew.-%. Das Bindemittel mit dem Füllstoff, ggf. ergänzt durch den elastifizierenden Zusatz, bildet den größten Anteil des plattenförmigen Werkstoffs nach der Erfindung, meist den überwiegenden Anteil am erfindungsgemäßen Werkstoff. Bevorzugt weist der plattenförmige Werkstoff, bezogen auf den Faseranteil, mehr als 100 Gew.-%, z. B. 101 Gew.-% oder 102 Gew.-% bis zu 120 Gew.-% Bindemittel und Füllstoff auf, vorteilhaft weist der Werkstoff mehr als 150 Gew.-% Bindemittel und Füllstoff, besonders bevorzugt mehr als 200 Gew.-% Bindemittel und Füllstoff, maximal 500 Gew.-% Bindemittel und Füllstoff, jeweils bezogen auf den Faseranteil, auf.

Für den erfindungsgemäßen plattenförmigen Werkstoff können organische oder anorganische Fasern eingesetzt werden. Natürliche Fasern, z. B. lignocellulosische Fasern, Baumwoll- oder Leinenfasern oder synthetische Fasern wie beispielsweise Fasern aus thermoplastischem Material wie Polyethylen oder Polypropylen, aber auch aus Polycarbonat, Polyacrylat, Polymethacrylat oder Polyurethan können zur Herstellung des erfindungsgemäßen Werkstoffs eingesetzt werden. Anorganische Fasern wie Carbonfasern oder Fasern aus mineralischem oder keramischem Rohstoff oder Glasfasern sind insbesondere in Mischung mit anderen Fasern geeignet zur Herstellung des plattenförmigen Werkstoffs. Insbesondere können Mischungen von Fasern, insbesondere Mischungen der vorgenannten Fasern, zur Herstellung des erfindungsgemäßen Werkstoffs eingesetzt werden. Mischungen von Fasern ermöglichen das Einstellen von Eigenschaften des erfindungsgemäßen Werkstoffs, z. B. der Elastizität oder der Biegeeigenschaften, der Formstabilität, der Festigkeit, aber auch der Herstellungseigenschaften bzw. der Verarbeitbarkeit. Werden Fasern aus nachwachsenden Rohstoffen, insbesondere lignocellulosische Fasern, z. B. Fasern aus Holz, Bambus oder Einjahrespflanzen eingesetzt, so stehen preiswerte, einfach zu verarbeitende Fasern zur Verfügung. Natürliche Faser werden bevorzugt unbehandelt eingesetzt, d. h., die Faserkomponenten Cellulose und Lignin sowie ggf. Hemicellulosen sind nicht in ihren Eigenschaften durch chemische Verfahren verändert. Der Einsatz hygroskopischer Fasern ist nicht ausgeschlossen, insbesondere sofern diese vor dem Herstellen bzw. Verpressen des erfindungsgemäßen Werkstoffs mindestens teilweise getrocknet werden.

Die vorstehend erwähnten lignocellulosischen Fasern umfassen erfindungsgemäß sämtliche Fasern, die durch chemische oder physikalische Verfahren aus Pflanzen gewonnen wurden. Typische Beispiele für physikalisch gewonnene Fasern sind Nadelholzfasern, Laubholzfasern oder Bambusfasern, oder Fasern aus anderen organischen Rohstoffen, die durch mechanische Zerfaserung gewonnen wurden. Ein Beispiel für chemisch gewonnene Fasern sind z. B. Zellstofffasern aus Holz, Einjahrespflanzen oder anderen Rohstoffen, insbesondere nachwachsenden Rohstoffen. Auch Mischungen von Fasern können eingesetzt werden, insbesondere um Eigenschaften des Werkstoffs (Festigkeitseigenschaften, Gewicht) einzustellen, aber auch um den Rohstoff Faser kostenoptimiert einzusetzen. Fasern im Sinne dieser Erfindung sind auch Faserbündel; eingeschlossen sind auch kleinere Späne, soweit deren Fasern noch weitgehend mit Bindemittel beschichtet werden können.

Der erfindungsgemäße Werkstoff ist plattenförmig, d. h, er weist in der Regel zwei Hauptflächen auf, die im Folgenden auch als Ober- und Unterseite bezeichnet werden. Zwischen Ober- und Unterseite sind die Schmalflächen oder Kanten des Werkstoffs angeordnet. Die Dicke des fertigen plattenförmigen Werkstoffs kann erfindungsgemäß von 3 mm bis 500 mm betragen, typischerweise zwischen 3 mm und 80 mm, meist zwischen 3 mm und 30 mm. Eine typische Anwendung kann eine Dicke des plattenförmigen Werkstoffs von 4 mm bis 14 mm erfordern, insbesondere zwischen 4 mm und 7 mm. Der erfindungsgemäße Werkstoff kann ebene Hauptflächen aufweisen, die Ober- und/oder Unterseite können aber auch geprägt oder gefräst oder in anderer Weise bearbeitet sein, so dass sich, bezogen auf die Fläche des Werkstoffs, eine variable Dicke des Werkstoffs ergibt. Der Werkstoff weist bevorzugt eine über die Dicke im Wesentlichen homogene Zusammensetzung auf. Die Kanten, deren Höhe der Dicke des Werkstoffs entspricht, können mit üblichen Werkzeugen bearbeitet werden. Sie können gesägt, geschnitten oder gefräst werden. Der erfindungsgemäße plattenförmige Werkstoff ist in seiner maximalen Länge und Breite allein durch verfügbare Pressen begrenzt, die zur Herstellung des Werkstoffs eingesetzt werden. Kleinere Abmessungen können durch Zerlegen des plattenförmigen Werkstoffs hergestellt werden. Typische Abmessungen des plattenförmigen Werkstoffs können sein 5600 mm (Länge) x 2070 mm (Breite) nach Herstellung in der Presse, 1380 mm × 195 mm, nach Aufteilen in Boden-, Wand- oder Deckenpaneele oder 3048 mm × 2800 mm. Letzteres Format eignet sich besonders gut zur Verwendung im Bau, weil die Breite der Platte Geschosshöhe aufweist.

Der erfindungsgemäße plattenförmige Werkstoff kann vielseitig eingesetzt werden. Er kann z. B. eingesetzt werden als Fußboden-, Decken- und/oder Wandbelag, zur Herstellung von Innenausbauten oder Möbeln, insbesondere auch für den Innenausbau von Fahrzeugen wie z. B. Fahrzeugkabinen, aber auch im Außenbereich, sowohl als Verkleidung, z. B. als vorgehängte Fassade, als auch für konstruktive Verwendungen. Der plattenförmige Werkstoff nach der Erfindung kann beschichtet, gefärbt, lackiert oder in anderer Weise dekorativ gestaltet werden. Insbesondere Oberflächenbeschichtungen, wie sie z. B. aus dem Bereich der Holzwerkstoffe bekannt sind, können auf die Oberfläche des erfindungsgemäßen Werkstoffs aufgebracht werden, z. B. eine Beschichtung mit kunstharzgetränktem Papier, eine PVC-Beschichtung, ein Furnier, eine Lackierung oder eine Beschichtung mit Thermoplasten. Des Weiteren kann der erfindungsgemäße plattenförmige Werkstoff als ein Bestandteil einer Sandwichplatte eingesetzt werden, d. h, dass der erfindungsgemäße Werkstoff mit gleichen oder anderen folien- oder plattenförmigen Werkstoffen, insbesondere Holzwerkstoffplatten, aber auch Kunststoffplatten oder -folien zu einer Sandwichplatte verbunden wird.

Die Dichte des erfindungsgemäßen Werkstoffs beträgt zwischen 1.000 kg/m³ und 1.800 kg/m³, insbesondere zwischen 1.000 kg/m³ und 1.600 kg/m³, vorteilhaft zwischen 1.000 kg/m³ und 1.300 kg/m³, besonders vorteilhaft zwischen 1.030 kg/m³ und 1.200 kg/m³. Der erfindungsgemäße Werkstoff zeigt, bedingt durch den hohen Einsatz an Bindemittel und Füllstoff, gegenüber z. B. einem Holzwerkstoff, z. B. einer HDF-Platte, die mengenmäßig überwiegend lignocellulosische Fasern aufweist, ein höheres Gewicht, z. B. zwischen 1.000 kg/m³ und 1.200 kg/m³.

Der erfindungsgemäße Werkstoff unterscheidet sich von dem vorstehend beschriebenen WPC dadurch, dass nicht Kunststoff, insbesondere thermoplastischer Kunststoff mit Fasern zu einem plattenförmigen Werkstoff geformt wird, sondern dass ein Bindemittel eingesetzt wird, das eine kohäsive und/oder adhäsive Wechselwirkung mit den Fasern eingeht. Solche Bindemittel sind beispielsweise aus der Holzwerkstoffherstellung nach dem Stand der Technik bekannt. Das erfindungsgemäß eingesetzte Bindemittel weist vorzugsweise Melamin auf. Melamin wird in wässriger Lösung z. B. als Melamin-Formaldehydharz (MF-Harz) eingesetzt, wobei der Feststoffgehalt des Melamin enthaltenden Harzes bevorzugt mindestens 45 Gew.-% bezogen auf die wässrige Lösung beträgt, vorteilhaft beträgt der Feststoffgehalt über 50 Gew.-%. Die Obergrenze des Feststoffgehalts wird durch die Löslichkeit und ggf. Verarbeitbarkeit des Melamins z. B. in Sprühdüsen vorgegeben. Ein Melamin enthaltendes Harz wird als Bindemittel bevorzugt, weil es sich als nicht-quellend und nicht-hygroskopisch sowie als beständig gegen Hydrolyse erweist. Ein Melamin enthaltendes Harz kann entweder allein als Bindemittel eingesetzt werden oder in Kombination mit einem oder mehreren anderen Bindemitteln. In Kombination bedeutet im Zusammenhang mit dieser Erfindung, dass Mischungen von Bindemitteln eingesetzt werden können, wobei entweder die Mischung von zwei oder mehr Bindemitteln gleichzeitig auf die Faser aufgebracht wird. Oder es wird eine Kombination von Bindemitteln eingesetzt, die nacheinander eingesetzt werden, z. B. weil sie nicht in Mischung eingesetzt werden können oder weil ein getrenntes Auftragen von verschiedenen Bindemitteln vorteilhafte Wirkung hat. In Kombination mit dem vorstehend genannten Melamin enthaltenden Harz, insbesondere MF-Harz, oder alternativ dazu können weitere Bindemittel wie z. B. Methylendiphenylisocyanat (MDI), auch in emulgierter Form als eMDI oder polymerem Diphenylmethandiisocyanat (PMDI), aber auch Polyurethan eingesetzt werden. Phenolharz ist zwar wasserfest, aber dunkelfarbig, was in der Anwendung nachteilig ist. Wie vorstehend beschrieben können auch zwei oder mehr Bindemittel in Kombination eingesetzt werden. Es wird bevorzugt, wenn das Bindemittel überwiegend Melamin aufweist. Es wird weiter bevorzugt, wenn der Anteil des Melamin enthaltenden Harzes am Bindemittel 20 Gew.-%, insbesondere 50 Gew.-% übersteigt. Bevorzugt ist das Bindemittel harnstofffrei, da Harnstoff zur Hygroskopizität und damit zur Quellung der lignocellulosischen Fasern beiträgt bzw. diese nicht verhindert. Vorteilhaft werden thermoplastische Bindemittel vermieden, insbesondere wird der ausschließliche Einsatz von thermoplastischen Harzen vermieden, bevorzugt ausgeschlossen. Der erfindungsgemäße plattenförmige Werkstoff ist bevorzugt frei von Halogenen (z. B. Fluor, Chlor), aber auch von Terephthalaten.

Der erfindungsgemäße Werkstoff enthält Füllstoff. Der Füllstoff ersetzt dabei Bindemittel. Entsprechend beträgt der Anteil an Bindemittel und Füllstoff mehr als 50 Gew.-% bezogen auf den plattenförmigen Werkstoff. Der Anteil des Füllstoffs kann von 1 Gew.-% bis zu 30 Gew.-%, jeweils bezogen auf den plattenförmigen Werkstoff, betragen. Bevorzugt wird als Füllstoff ein nicht-hygroskopischer Füllstoff eingesetzt, insbesondere Kaolin (hydratisiertes Aluminiumsilikat). Alternativ zu oder als Mischung mit Kaolin dienen als weiterer erfindungsgemäßer Füllstoff
- Karbonate wie Magnesiumkarbonat oder Kalziumkarbonat (CaCO₃ bzw. Kreide),
- Metalloxide wie Titandioxid und/oder Aluminiumtrioxid,
- Metallhydroxide wie Aluminiumtrihydroxid,
- weitere Silikate wie hydratisiertes Magnesiumsilikat (Mg₃[(OH)₂|Si₄O₁₀] bzw. Talkum)
- andere Metallsalze wie Calciumsulfatdihydrat (Ca[SO₄]·2H₂O bzw. Gipsspat oder kurz Gips) oder Bariumsulfat (BaSO₄ bzw. Schwerspat).

Der Füllstoff wird in Form von Partikeln mit einer Größe von 0,1 µm bis 50 µm eingesetzt. Bindemittel und Füllstoff können den Fasern jeweils separat zugesetzt werden. Nach einer vorteilhaften Ausführung werden Bindemittel und Füllstoff gemischt, bevor sie den Fasern zugesetzt werden.

Bevorzugt weist der Werkstoff Zuschlagstoffe auf. Zuschlagstoffe können dazu beitragen, das Gewicht des plattenförmigen Werkstoffs zu optimieren, meist zu minimieren oder die Matrixstruktur aus Bindemittel, Füllstoff und Fasern weiter zu verbessern. Ein Zuschlagstoff oder eine Kombination aus Zuschlagstoffen können alternativ oder ergänzend dazu dienen, bestimmte Eigenschaften der Platten zu optimieren, z. B. Leitfähigkeit, isolierende Eigenschaften oder Festigkeitseigenschaften. Ein Zuschlagstoff ersetzt im erfindungsgemäßen Werkstoff Fasern. Da der Werkstoff in Gegenwart von Wasser eine minimale Quellung, insbesondere eine minimierte Dickenquellung aufweisen soll, werden nicht-hygroskopische oder nicht-quellende Zuschlagstoffe sowie Zuschlagstoffe bevorzugt, die beständig gegen Hydrolyse sind. Solche Zuschlagstoffe können keramische, synthetische oder Partikel aus Glas sein. Die Größe der Partikel ist bevorzugt nicht größer als ein Millimeter, vorzugsweise zwischen 10 µm und 800 µm. Es können auch Mischungen verschiedener Partikel eingesetzt werden, z. B. Mischungen verschiedener Materialien oder Größe. Es werden bis zu 30 Gew.-% bezogen auf das Gesamtgewicht des plattenförmigen Werkstoffs eingesetzt, besonders bevorzugt bis zu 20 Gew.-%, vorteilhaft bis zu 15 Gew.-%. Die untere Grenze der Einsatzmenge ergibt sich durch die Nachweisbarkeit eines Zuschlagstoffs. Der Zuschlagstoff kann vor oder nach dem Auftragen des Bindemittels sowie des Füllstoffs auf die Fasern aufgebracht werden, bevorzugt durch Sprühen.

Der plattenförmige Werkstoff kann nach einer vorteilhaften Ausführung durch den Zusatz eines Elastomers oder Thermoplasten, der als elastifizierender Zusatz eingesetzt wird, z. B. durch Zusatz von Polyvinylacetat (PVAc) oder Ethyl-Vinyl-Acetat in seinen elastischen Eigenschaften modifiziert, insbesondere verbessert werden. Acrylat, Styrolacrylat oder Polyurethan (PU) werden bevorzugt zum Elastifizieren des erfindungsgemäßen plattenförmigen Werkstoffs eingesetzt, erfindungsgemäß in Form eines flüssigen Zusatzes wie z. B. einer Dispersion, weil sie wasserfest sind. Bevorzugt werden Acrylat, Styrolacrylat und PU mit einer Glasübergangstemperatur von TG kleiner 0 °C eingesetzt. Aber auch Mono- oder Diethylenglykol sind zum Elastifizieren des plattenförmigen Werkstoffs geeignet. Die vorstehend genannten elastifizierenden Zusätze können jeweils für sich allein, aber auch in Mischung eingesetzt werden. Der Zusatz von Elastomeren oder Thermoplasten reduziert die Sprödigkeit des plattenförmigen Werkstoffs und verbessert die elastischen Eigenschaften des erfindungsgemäßen plattenförmigen Werkstoffs, z. B. den E-Modul. Außerdem bewirkt der Zusatz von elastifizierenden Zusätzen ein besseres Planliegen des plattenförmigen Werkstoffs. Der elastifizierende Zusatz wird, als Feststoff berechnet, anteilig bezogen auf die Menge des Feststoffs des eingesetzten Kunstharzes eingesetzt. Der elastifizierende Zusatz wird, bezogen auf das Kunstharz, in einem Verhältnis von 1:1, bevorzugt von 0,7:1, insbesondere von 0,2:1, vorteilhaft 0,01:1 eingesetzt. Der elastifizierende Zusatz wird also bevorzugt nicht als Hauptbestandteil des Bindemittels eingesetzt, vor allem nicht als mengenmäßiger Hauptbestandteil. Die elastifizierenden Zusätze werden beispielsweise dem Bindemittel, z. B. Melaminharz, vor dem Auftragen auf die Fasern zugesetzt und gemeinsam mit dem Bindemittel und dem Füllstoff auf die Fasern aufgetragen. Alternativ kann das Mittel zum Elastifizieren vor oder nach dem Bindemittel bzw. dem Füllstoff auf die Fasern aufgetragen werden.

Gemäß einer vorteilhaften Ausführung der Erfindung weist der plattenförmige Werkstoff Hydrophobierungsmittel auf, z. B. Paraffin oder Wachs, die typischerweise in Mengen von bis zu 5 Gew.-% bezogen auf das Gewicht des plattenförmigen Werkstoffs eingesetzt werden, meist in Mengen von bis zu 2 Gew.-%, oft in einer Menge von 0,1 Gew.-% bis 1 Gew.-%. Auch der Einsatz von Hydrophobierungsmitteln trägt zu einer Reduzierung der Quellungsneigung des plattenförmigen Werkstoffs bei.

Die Offenbarung betrifft weiter ein Verfahren zum Herstellen eines plattenförmigen Werkstoffs, aufweisend Fasern und Bindemittel und Füllstoff, wobei der Anteil des Bindemittels und des Füllstoffs am plattenförmigen Werkstoff mehr als 50 Gew.-% beträgt, mit den Schritten:
- Bereitstellen von Fasern,
- Bereitstellen des Bindemittels, bevorzugt in flüssiger Form, sowie optional eines elastifizierenden Zusatzes,
- Bereitstellen des Füllstoffs,
- Auftragen des Bindemittels und des Füllstoffs sowie des optional eingesetzten elastifizierenden Zusatzes auf die Fasern,
- Formen eines Faserkuchens,
- Verpressen des Faserkuchens in einer Presse unter Aushärten des Bindemittels zum Erzeugen eines plattenförmigen Werkstoffs.

Die Schritte des Verfahrens entsprechen denen eines konventionellen Verfahrens z. B. zum Herstellen einer Holzwerkstoffplatte in einer Presse. Erfindungsgemäß wird jedoch eine größere Menge an Bindemittel und Füllstoff sowie des optional eingesetzten elastifizierenden Zusatzes eingesetzt als bisher bekannt, so dass der Gewichtsanteil des Bindemittels und des Füllstoffs sowie des optional eingesetzten elastifizierenden Zusatzes größer ist als der Gewichtsanteil der Fasern.

Werden synthetische oder anorganische Fasern eingesetzt, kann es erforderlich sein, das Bindemittel auf den Fasern mindestens teilweise zu trocknen. Weisen die Fasern Feuchtigkeit auf, so wie es z. B. für lignocellulosische Fasern üblich ist, sollte der Feuchtegehalt vor dem Verpressen des Faserkuchens so eingestellt werden, dass nach dem Verpressen eine formstabile, nicht quellende oder schwindende Platte vorliegt. Die lignocellulosischen Fasern werden vor der Beleimung oft mit einer Feuchte von bis zu 120 Gew.-% oder mehr eingesetzt. Die lignocellulosischen Fasern können vor oder nach dem Aufbringen von Bindemittel und Füllstoff getrocknet werden. Beim Verpressen ist es bevorzugt, wenn die lignocellulosischen Fasern eine Feuchte von minimal 3 Gew.-% bis maximal 15 Gew.-% aufweisen, das heißt, mit einem Wassergehalt von mindestens 3 Gew.-% bis zu 15 Gew.-% bezogen auf das Gesamtgewicht der Fasern.

Das Bindemittel wird in der Regel in flüssiger Form bereitgestellt. Es kann in reiner Form bereitgestellt werden oder -was die Regel ist- in Lösung, entweder in Lösemittel oder in Wasser oder als Dispersion bzw. Emulsion. Der Füllstoff wird in Form von Partikeln bereitgestellt. Es wird als eigenständige Erfindung angesehen, Bindemittelmonomere oder -oligomere zusammen mit dem Füllstoff zu einem Bindemittel bzw. einem gefüllten Bindemittel zu verarbeiten. Bei der Herstellung des Bindemittels aus Monomeren oder Oligomeren wird beispielsweise das Füllmittel eingestreut und unter Rühren wird das Bindemittel ggf. in Gegenwart von Wasser oder Lösungsmittel hergestellt. Vor dem Auftragen auf die Fasern wird das Bindemittel-Füllstoff-Gemisch ggf. wieder aufgerührt.

Das Auftragen des Bindemittels und des Füllstoffs auf die lignocellulosischen Fasern erfolgt meist durch Sprühen, z. B. durch eine Mehrzahl von Sprühdüsen, die einen Sprühnebel des Bindemittels erzeugen und die um einen Abwärtsstrom von Fasern herum angeordnet sind. Bevorzugt werden Bindemittel und Füllstoff vor dem Aufbringen auf die Fasern gemischt bzw. es wird das vorstehend beschriebene Gemisch aus Bindemittel und Füllstoff eingesetzt. Auch der elastifizierende Zusatz wird vor, während oder nach dem Auftragen des Bindemittels bzw. Füllstoffs zugegeben, meist durch Sprühen. Eine typische Ausführung für eine solche Auftragsvorrichtung ist z. B. eine Blowline, die bei der Faserplattenherstellung eingesetzt wird. Die Oberfläche der Fasern wird mit Bindemitteltröpfchen bzw. durch einen Bindemittelnebel benetzt, wobei das Bindemittel optional mit Füllstoff versetzt ist. Alternativ kann der Füllstoff separat vom Bindemittel, gleichzeitig oder zeitversetzt, durch Sprühen oder Streuen aufgetragen werden. Die mit Bindemittel und ggf. Füllstoff benetzten Fasern werden, nachdem sie optional getrocknet wurden, zu einem Faserkuchen geformt und verpresst. Dabei härtet das Bindemittel aus, so dass ein plattenförmiger Werkstoff entsteht. Beim Aushärten, das unter Einwirkung von Druck und Temperatur im Wesentlichen auf die Ober- und Unterseite des Faserkuchens erfolgt, werden, anders als bei WPC-Produkten, irreversible chemische Bindungen zwischen Fasern und Bindemittel, aber auch innerhalb des Bindemittels aufgebaut. Das erfindungsgemäße Verfahren vermeidet den Aufwand des Knetens und des Extrudierens.

Es hat sich überraschenderweise herausgestellt, dass die Pressbedingungen insbesondere denen bekannter Holzwerkstoffe mit einem gegenüber der Erfindung verringerten Anteil von Bindemittel und Füllstoff im Wesentlichen gleich sind. Druck und Temperatur sowie Pressdauer liegen z. B. im Bereich üblicher HDF-Platten (Hochdichter Faserplatten). Der erfindungsgemäße Werkstoff lässt sich ausgezeichnet in Pressen herstellen, wie sie für die Herstellung von Holzwerkstoffen eingesetzt werden. Insbesondere sind kontinuierliche oder diskontinuierliche Heißpressen, z. B. kontinuierliche Doppelbandpressen mit umlaufenden, beheizten Metallbändern oder taktweise arbeitenden Pressen geeignet. Damit lassen sich Plattenformate herstellen, die -anders als bei WPC- nicht auf die Herstellung schmaler Dielenformate mit einer Breite von ca. 30 cm limitiert sind. Vielmehr können konventionelle Plattenformate bereitgestellt werden, wie sie für Holzwerkstoffplatten üblich sind.

Das Herstellen des Faserkuchens erfolgt, wie bei Holzwerkstoffen üblich, in der Regel durch Streuen. Die mit der gesamten Menge des Bindemittels und Füllstoffs entweder frisch beleimten oder vorzugsweise getrockneten Fasern werden auf einen Träger, meist auf ein Förderband, gestreut, meist in einer homogenen Schicht, aber alternativ auch in mehreren Schichten, wobei die Schichten eine unterschiedliche Zusammensetzung hinsichtlich Fasern, Bindemittel, Füllstoff, elastifizierendem Zusatz, Zuschlagstoffen oder Additiven aufweisen können. Der Füllstoff kann auch erst beim Streuen des Faserkuchens zugesetzt werden. Der gestreute Faserkuchen wird auf dem Träger ggf. zuerst durch eine Vorpresse geführt und dann in einer Presse verpresst. Die Presse wirkt dabei erfindungsgemäß auf die Ober- und Unterseite des Faserkuchens bzw. des plattenförmigen Werkstoffs ein.

Jede Presse, die in ausreichender Weise Druck und Temperatur aufbringt, ist geeignet, sowohl eine Plattenpresse, in der der Werkstoff zwischen zwei Blechen verpresst wird, als auch insbesondere eine kontinuierliche Presse, in der der Werkstoff zwischen zwei umlaufenden Metallbändern gepresst wird. Bevorzugt werden Heißpressen eingesetzt, deren Pressbleche oder umlaufende Metallbänder auf eine vorgegebene Temperatur aufgeheizt sind. Geeignete Presstemperaturen können von 100 °C bis 220 °C, bevorzugt von 110 °C bis 160 °C gewählt werden. Je dünner die Platte, desto niedriger kann die Presstemperatur gewählt werden. Geeignete Pressdrücke liegen beispielsweise in einem Bereich von 0,3 N/mm² bis 5,5 N/mm², insbesondere 1 N/mm² bis 3 N/mm². Die Pressdauer beträgt vorteilhaft 6 Sekunden/mm Plattendicke (im Folgenden: s/mm) bis 60 s/mm, meist 10 s/mm bis 30 s/mm. Bei kontinuierlichen Pressen beträgt die Vorschubgeschwindigkeit der umlaufenden Metallbänder, zwischen denen der plattenförmige Werkstoff durch Verpressen hergestellt wird, meist zwischen 100 mm/Sekunde und 1000 mm/Sekunde.

Dem eigentlichen Pressvorgang kann eine Vorpresse zum Verdichten des Faserkuchens vorgeschaltet sein. Optional kann der Presse eine Vorrichtung zum Abkühlen des plattenförmigen Werkstoffs nachgeschaltet sein, insbesondere eine Vorrichtung zum Abkühlen unter einem vorgegebenen Pressdruck, der geringer sein kann als der Pressdruck während des Pressens des Werkstoffs.

Dem erfindungsgemäßen Werkstoff können die vorstehend beschriebenen Zuschlagstoffe, Additive oder Hydrophobierungsmittel zugesetzt werden, typischerweise vor oder während des Formens des Faserkuchens.

Der nach dem erfindungsgemäßen Verfahren hergestellte Werkstoff hat bevorzugt eine Oberfläche, die im Wesentlichen Bindemittel und Füllstoff, optional den elastifizierenden Zusatz aufweist, besonders bevorzugt eine Oberfläche, die aus Bindemittel und Füllstoff bzw. dem elastifizierenden Zusatz besteht. Insbesondere bei Einsatz hygroskopischer Fasern, z. B. lignocellulosischer Fasern, wird angestrebt, so wenig Fasern wie möglich in der Oberfläche des Werkstoffs zu haben, um die Dickenquellung so weit wie möglich zu optimieren. Zu der Vorgabe, einen nicht-quellenden plattenförmigen Werkstoff herzustellen, trägt insbesondere der Zusatz von Kaolin und anderen Füllstoffen bei, die nicht-hygroskopische Materialien sind, die dennoch eine hohe Wasserabsorption gewährleisten. Damit kann z. B. bei hoher Luftfeuchtigkeit Wasser absorbiert werden, das nachfolgend, bei geringerer Luftfeuchtigkeit wieder abgegeben wird. Durch den Füllstoff weist der plattenförmige Werkstoff nach der Erfindung eine leicht sandige Oberfläche auf. Die weitere Be- und Verarbeitung der Oberfläche wird dadurch jedoch nicht beeinträchtigt. Das Stapeln des erfindungsgemäßen Werkstoffs erfolgt einfach und rutschfrei.

Der erfindungsgemäße Werkstoff kann wie eine Holzwerkstoffplatte, z. B. wie eine HDF-Platte, bearbeitet werden. Die Oberfläche kann beschichtet, geprägt oder gefräst werden; die Kanten können profiliert werden, z. B. zur Herstellung von Fußbodenpaneelen. Der plattenförmige Werkstoff nach der Erfindung kann mit kunstharzgetränkten Papieren laminiert werden, er kann bedruckt, lackiert, lasiert oder in anderer Weise bearbeitet, insbesondere beschichtet werden. Es ist als Vorteil dieser Erfindung anzusehen, dass der plattenförmige Werkstoff auf vorhandenen Vorrichtungen be- und verarbeitet werden kann.

Der erfindungsgemäße plattenförmige Werkstoff kann durch unterschiedliche Kombinationen von Fasern, Bindemittel, Füllstoff, optional zugesetztem elastifizierendem Zusatz, Zuschlagstoffen und ggf. anderen Additiven wie Wachsen an verschiedene Anforderungen angepasst werden. Es wird deshalb ausdrücklich darauf verwiesen, dass die vorstehend beschriebenen Merkmale jeweils frei miteinander kombiniert werden können.

Eine Dickenquellung, die, bezogen auf die ursprüngliche Plattendicke, weniger als 5 %, bevorzugt weniger als 3 %, insbesondere weniger als 2% beträgt, wird als erfindungsgemäß angesehen. Auf minimale Dickenquellung optimierte, erfindungsgemäße plattenförmige Werkstoffe weisen eine Dickenquellung gemäß DIN 317 bzw. eine Kantenquellung gemäß DIN 13329 von nur 0,5% bis 1% auf. Der erfindungsgemäße plattenförmige Werkstoff ist somit quellungsarm oder, bei Erreichen einer maximalen Dickenquellung von bis zu 1 % bezogen auf die ursprünglichen Plattendicke, quellungsfrei und formstabil. Damit kann z. B. auf bekannten Vorrichtungen zur Herstellung von Holzwerkstoffplatten nun ein plattenförmiger, im Wesentlichen nicht-quellender, gegenüber Wasser bzw. Luftfeuchtigkeit formstabiler Werkstoff hergestellt werden, der nicht auf schmale Formate begrenzt ist und der bevorzugt den Einsatz nachwachsender Rohstoffe maximiert.

Details der Erfindung werden nachfolgend an Ausführungsbeispielen erläutert. Es zeigt:

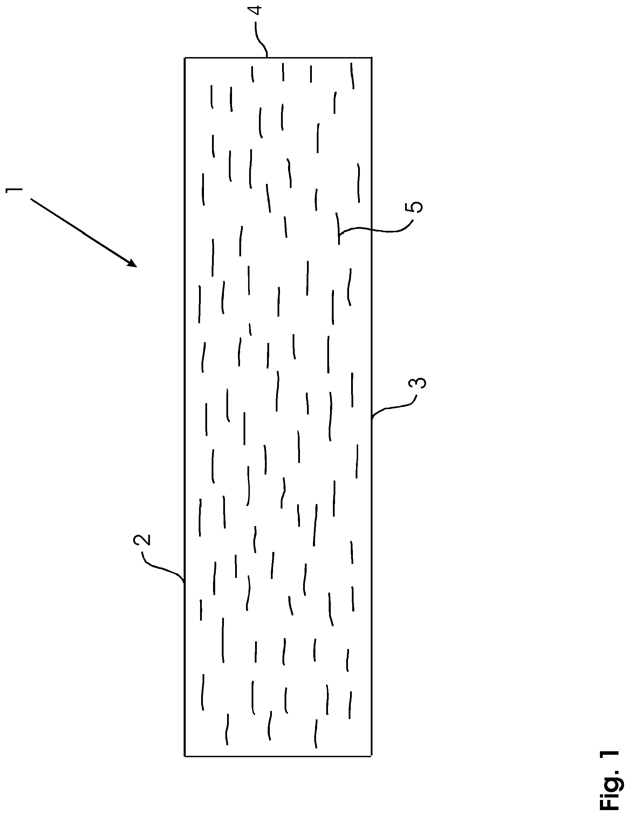

- Fig. 1: eine schematische Darstellung eines erfindungsgemäßen plattenförmigen Werkstoffs

Die Abbildung zeigt einen plattenförmigen Werkstoff 1 mit einer Oberseite 2 und einer Unterseite 3 sowie einer Kante 4. Der Werkstoff weist Fasern 5 auf, die in Bindemittel und Füllstoff eingebettet sind. Der Anteil von Bindemittel und Füllstoff beträgt mehr als 50 Gew.-% des plattenförmigen Werkstoffs. Es wird also mehr Bindemittel und Füllstoff als Faser 5 eingesetzt. Als Fasern können natürliche, synthetische, organische und anorganische Fasern eingesetzt werden, sowohl einzeln als auch in Mischung. Auch hygroskopische Fasern wie z. B. Holz-, Cellulose- oder Leinenfasern können eingesetzt werden. Als Bindemittel wird bevorzugt MF-Harz eingesetzt, aber auch Melamin-Phenoharz kann verwendet werden, häufig in Kombination mit PMDI. In Kombination kann hier bedeuten, dass beide Harze gleichzeitig oder nacheinander eingesetzt werden. Beispiele für Kombinationen von Fasern und Bindemittel werden nachfolgend beschrieben. Als Füllstoff wird bevorzugt Kaolin eingesetzt.

Im Folgenden werden zwei Vergleichsbeispiele und ein Ausführungsbeispiel näher erläutert, die in Tabelle 1, Teil 1 und 2 gezeigt sind. Vergleichsbeispiel 1 ist in Zeile 1 dargestellt, Vergleichsbeispiel 2 in Zeile 2 und das Ausführungsbeispiel 1 in Zeile 3.

### Vergleichsbeispiel 1

Für das Vergleichsbeispiel 1, dessen Ergebnisse nachfolgend in Tabelle 1 dargestellt sind, werden lignocellulosische Fasern, hier Nadelholzfasern, eingesetzt. Die Fasern wurden aus gedämpften Holzhackschnitzeln durch Zerfasern im Refiner hergestellt. Alternativ können beliebige andere lignocellulosische Fasern oder Gemische solcher Fasern eingesetzt werden. Die Nadelholzfasern werden mit einer Feuchte von 120% vor dem Beleimen eingesetzt; vor dem Verpressen werden sie mit dem darauf befindlichen Bindemittel auf eine Restfeuchte von 6% getrocknet, d. h., eine Tonne Fasern enthält 60 kg Wasser.

Für diesen Versuch werden mehr als 100 Gew.-%, vorliegend ca. 105 Gew.-% Bindemittel bezogen auf atro Holz, hier im Folgenden als atro Fasern bezeichnet, eingesetzt, hier ein Bindemittel aufweisend Melamin-Formaldehydharz (MF-Harz). Das im Bindemittel verwendete Melamin-Formaldehydharz (MF-Harz) hatte eine Feststoffkonzentration von 60% (gemessen bei 60 min/120°C). Somit wurden auf 100 Gramm atro Faserstoff (atro Fasern) unter Berücksichtigung des Flüssigkeitsanteils 175 Gramm Bindemittel flüssig, enthaltend 105 g MF-Harz aufgetragen (105 g bei 60% Feststoffkonzentration = 175 g). "Atro Holz" bzw. "atro Fasern" bezeichnet hier lignocellulosische Fasern, die bei 105°C bis zur Gewichtskonstanz getrocknet wurden. "Atro Holz" ist ein übliches Referenzmaß für Rezepturen, die lignocellulosische Fasern enthalten. In den weiteren Ausführungsbeispielen wird auf den absoluten Einsatz des Bindemittels abgestellt.

Des Weiteren werden 5 Gew.-% Paraffin bezogen auf atro Holz eingesetzt. Zusätzlich werden 2 Gew.-% Ammoniumsulfat bezogen auf atro Fasern eingesetzt. Das Bindemittel wird in vier Durchgängen auf die lignocellulosischen Fasern aufgetragen, je Durchgang wird jeweils ein Viertel des Bindemittels auf die Fasern aufgebracht. Das flüssige Bindemittel wird in einer bekannten Vorrichtung zum Beleimen von Fasern durch Düsen versprüht. Der durch die Düsen erzeugte Sprühnebel schlägt sich auf der Oberfläche der Fasern nieder, die den Sprühnebel passieren, z. B. von oben nach unten durch den Sprühnebel aus Bindemittel fallen. Soweit Tabelle 1 die Bestandteile des plattenförmigen Werkstoffs in absoluten Werten zeigt, kann die Summe dieser Bestandteile über der angegebenen Rohdichte liegen, z. B. weil flüchtige Bestandteile während des Pressvorgangs verdampfen oder verdunsten.

An die Vorrichtung zum Beleimen von Fasern schließt sich eine Trocknung der beleimten Fasern in Mitteln zum Trocknen an, z. B. ein Warmlufttunnel oder -schacht, die erhitzte Luft auf die Fasern aufbringen. Ziel des Trocknens ist nicht das vollständige Entfernen jeglicher Flüssigkeit, sondern das Trocknen des Bindemittels so weit, dass es nicht mehr klebt. Die Reaktivität des Bindemittels beim Aushärten unter Einwirkung von Druck und/oder Temperatur soll durch das Trocknen nicht beeinträchtigt werden.

Nach dem Trocknen können die Fasern gelagert oder weiter beleimt bzw. verarbeitet werden. Zunächst schließt sich ein zweiter Durchgang durch die Vorrichtung zum Beleimen an, bei dem erneut ein Viertel MF-Harz auf die nach dem ersten Durchgang bereits vorbeleimten Fasern aufgesprüht wird. Auch nach dem zweiten Durchgang werden die beleimten Fasern getrocknet, bis sie nicht mehr aneinanderhaften bzw. - kleben. In gleicher Weise wird ein dritter und vierter Durchgang durch die Vorrichtung zum Beleimen und die Mittel zum Trocknen durchgeführt. Alternativ können die 105 Gew.-% Bindemittel auch in ein oder zwei Durchgängen, alternativ auch in fünf oder mehr Durchgängen auf die Fasern aufgebracht werden. Die Menge des je Durchgang auf die Fasern aufgebrachten Bindemittels kann von Durchgang zu Durchgang variieren.

Die beleimten Fasern werden zu einem plattenförmigen Werkstoff mit einer Dicke von ca. 4,3 mm verarbeitet. Dies geschieht durch Streuen eines Faserkuchens, der in einer bekannten kontinuierlich mit einem Vorschub von 410 mm/s arbeitenden Doppelbandpresse bei 180 °C und einem Druck von 2,5 N/mm² bei ca. 20 s/mm Plattendicke Pressdauer verpresst wird. Die so erzeugte Platte weist nach dem Verpressen eine Rohdicke von 4,6 mm und eine Dichte von 1200 kg/m³ auf. Die verpresste Platte wird geschliffen auf eine Dicke von ca. 4,3 mm. Bei kontinuierlichen Pressen bezieht sich die Temperaturangabe auf den Einlauf der Presse. Die Platte weist unmittelbar nach dem Pressen eine Rohbreite von 2,14 m auf und wird auf eine verarbeitungsbereite Netto-Breite von 2,07 m besäumt.

Der so hergestellte plattenförmige Werkstoff wird gemäß DIN 317 auf Quellung und gemäß DIN 13329 auf Kantenquellung geprüft. Die Dickenquellung wird an einer Kante des Werkstoffs als Veränderung in mm bezogen auf die Dicke von 4,5 mm absolut und auch als relative Änderung (%) bestimmt.

### Vergleichsbeispiel 2

Für den Faseranteil des plattenförmigen Werkstoffs gemäß Ausführungsbeispiel 2 wird gemäß Tabelle 1 dieselbe Menge an Fasern eingesetzt wie beim Vergleichsbeispiel 1.

Der Anteil der atro Fasern beträgt ca. 47 Gew.-% am plattenförmigen Werkstoff. Der Anteil des Bindemittels setzt sich wie folgt zusammen: ca. 84 Gew.-% MF-Harz und ca. 21 Gew.-% eines elastifizierenden Zusatzes, hier Styrolacrylat, jeweils bezogen auf den Anteil an atro Fasern. MF-Harz und Styrolacrylat werden jeweils separat voneinander auf die Fasern aufgetragen. Die Menge an Bindemittel und elastifizierendem Zusatz ist größer als die eingesetzte Menge an Fasern. Ergänzend werden wie im Vergleichsbeispiel 1 und in denselben Mengen Ammoniumsulfat und Paraffin eingesetzt.

Der elastifizierende Zusatz, der Teile des Melamins ersetzt, reduziert die Sprödigkeit des plattenförmigen Werkstoffs. Die Quellungseigenschaften des plattenförmigen Werkstoffs wurden hierdurch nicht berührt.

### Ausführungsbeispiel 1

Ausführungsbeispiel 1 baut auf Vergleichsbeispiel 2 auf. Es werden, wie aus Tabelle 1, Teil 1 und 2 ersichtlich ist, dieselben Mengen an Fasern, elastifizierendem Zusatz, Ammoniumsulfat und Paraffin eingesetzt. Der plattenförmige Werkstoff wird auf die gleiche Weise und unter denselben Bedingungen hergestellt, soweit nachfolgend nichts anderes beschrieben wird.

Beim Ausführungsbeispiel 1 wird die Menge des eingesetzten Melamins auf ca. 59 Gew.-% bezogen auf den Einsatz der atro Fasern reduziert. Zusätzlich zum Vergleichsbeispiel 2 wird Füllstoff, hier Kaolin, eingesetzt. Die Menge des eingesetzten Füllstoffs beträgt ca. 26 Gew.-% bezogen auf atro Fasern.

Der Anteil von Bindemittel, Füllstoff und elastifizierendem Zusatz ist größer als der Anteil an Fasern im plattenförmigen Werkstoff. Zur Herstellung einer Mischung aus Bindemittel und Füllstoff wurden MF-Harz (Handelsname: WDF-04) und mineralischer Füllstoff (Kaolin) verwendet. Das Bindemittel wurde zunächst mit Kaolin versetzt. Konkret werden für einen Produktionsansatz die vorstehend angegebenen Anteile von Melaminharz und Kaolin miteinander verrührt. Die Dosierung des Kaolins erfolgte direkt in einem Reaktor nach Abschluss des Herstellungsvorgangs des MF-Harzes (WDF-04), d. h., nach dem mindestens teilweisen polymerisieren des Melamin-Formaldehydpolymers. Der pH-Wert wird optional mit Natronlauge nach oben korrigiert, weil Kaolin leicht sauer wirkt (pH5.5). Das Kaolin wurde also mit dem gebrauchsfertigen MF-Harz verrührt, bis eine gleichmäßige Mischung erreicht war. Das Produkt ist bis zum Verbrauch homogen (keine Sedimentierung festgestellt), wobei es innerhalb 24 Std. vollständig verbraucht wird. Die Mischung aus MF-Harz und Kaolin war noch flüssig und sprühfähig. Die Menge an Kaolin beträgt 20 Gew.-% bezogen auf das MF-Harz, berechnet als 100 Gew.-% Feststoffgehalt. Das elastifizierende Mittel, eine Acrylatdispersion mit dem Handelsnamen AS 2040, wurde vor der Herstellung der Platte separat auf die Fasern gesprüht.

Bei der Produktion der erfindungsgemäßen Platte wurde nichts Besonderes festgestellt; der Auftrag der MF-Harz-Kaolin-Mischung auf die Fasern und die anschließende Herstellung der Platte verlief einwandfrei. Beim Abstapeln erweisen sich die Platten mit Füllstoff als weniger rutschig als die Vergleichsplatten. Die beschichtete, mit Kaolin als Füllstoff versetzte Platte weist für die Kantenquellung einen Quellungswert unter 1% auf. Es hat sich also herausgestellt, dass das Bindemittel teilweise durch Füllstoff ersetzt werden kann, ohne die Eigenschaften des plattenförmigen Werkstoffs zu ersetzen.

Bei den nachfolgenden Ausführungsbeispielen wird jeweils eine Trägerplatte nach dem Ausführungsbeispiel 1 eingesetzt, die auf der Oberseite beschichtet und optional auf der Unterseite mit einem Trittschallschutz, z. B. einer aufkaschierten Pappe, versehen wird.

### Ausführungsbeispiel 2 - Trägerplatte mit Papieraufbau verpresst

Auf die Oberseite der Trägerplatte werden ein Dekorpapier und ein Overlay aufgelegt, ein optional eingesetzter Gegenzug wird unter die Unterseite der Trägerplatte gelegt und dieser Pressgutstapel aus drei bzw. vier Schichten wird in einer Kurztaktpresse verpresst. Overlay, Dekorpapier und der optional eingesetzte Gegenzug werden jeweils als kunstharzgetränkte Papierimprägnate eingesetzt. Es entsteht eine beschichtete Trägerplatte, die eine höhere Beständigkeit gegen Säuren und Laugen aber auch eine verbesserte Abriebfestigkeit jeweils gegenüber der unbeschichteten Trägerplatte und ein ästhetisch ansprechendes Dekor mit synchroner Struktur aufweist.

Eingesetzt wird für das Ausführungsbeispiel 2 ein Dekorpapier als Papierimprägnat mit einem Gesamtgewicht von 110 bis 200 g/m² und mit einem Dekoraufdruck aus 1 bis 6 Farben. Weiter erfolgt zur Herstellung des Dekorpapierimprägnats eine vor oder nach dem Bedrucken durchgeführte Harzimprägnierung auf der Basis von Harnstoff- oder Melaminharz oder einem Gemisch der beiden Harze, wobei das Kunstharz flüssig oder als Feststoff, insbesondere pulverförmig aufgebracht wird. Anschließend wird das Kunstharz getrocknet, aber noch nicht ausgehärtet, bis es im Zustand B mit einem Gewicht von 60 g/m² bis 110 g/m² vorliegt.

Weiter wird ein Overlay als Papierimprägnat mit einem Gesamtgewicht von 120 bis 400 g/m² eingesetzt, basierend auf einem Rohpapier mit einem Gewicht von 30 g/m² bis 70 g/m², einer Harzimprägnierung auf Basis von Melaminharz, das wässrig oder als Feststoff, insbesondere pulverförmig aufgebracht wird, und das nach der Trocknung im Zustand B, also noch nicht ausgehärtet, mit einem Gewicht von 85 g/m² bis 280 g/m² vorliegt, sowie einer Füllung mit Korund.

Schließlich wird optional ein Gegenzug als Papierimprägnat mit einem Gesamtgewicht von 150 g/m² bis 240 g/m² eingesetzt, basierend auf einem Rohpapier und einer Harzimprägnierung auf Basis von Harnstoff- und/oder Melaminharz oder Gemischen aus den beiden Harzen, welche wässrig oder als Feststoff, insbesondere pulverförmig aufgebracht wird.

Alternativ oder zusätzlich zu einem Gegenzug kann eine Trittschalldämmung, z. B. eine Lage Pappe oder Karton oder EPS, auf der Unterseite der Trägerplatte angebracht werden, typisch durch Kaschieren, also durch Aufkleben der Trittschalldämmung mittels eines Klebstoffs.

Die weitere Herstellung der Beschichtung auf dem Werkstück erfolgt, indem ein Pressgutstapel hergestellt wird, der von oben nach unten das Overlay als Papierimprägnat, das Dekorpapier als Papierimprägnat, die Trägerplatte und optional den Gegenzug als Papierimprägnat aufweist. Der Pressgutstapel wird in einer Kurztakt-Heißpresse zu einem Laminat verpresst, wobei die Kurztaktpresse ein oberes Pressblech aufweist, das auf das Overlay einwirkt, und ein unteres Pressblech, das auf die Unterseite der Trägerplatte oder den Gegenzug einwirkt, und wobei die Kurztaktpresse wie folgt eingestellt ist:
- ein Druck von min. 25 kg/cm² und
- eine erhöhte Temperatur von 180 °C bis 220 °C, bevorzugt von 200 °C, gemessen am Pressblech, und
- eine Presszeit von 6 Sekunden bis 30 Sekunden.

Unter Ausbildung einer Oberflächenstruktur mittels des oberen Pressblechs, das optional eine Struktur aufweist, die mindestens abschnittsweise auf das Dekor angepasst ist (sogenanntes "embossed in register"), wird eine beschichtete Trägerplatte hergestellt.

Die so hergestellte, beschichtete Trägerplatte ist auch unter Wassereinfluss formstabil, sie quillt nicht und sie zeigt auch keine Verformung in der Fläche, also kein Biegen oder Verwerfen.

### Ausführungsbeispiel 3 - Trägerplatte mit Dekorpapier, Overlay und Lackschicht

Auf das Overlay, in das gemäß Ausführungsbeispiel 2 eine Struktur eingeprägt ist, kann noch eine ein- oder mehrschichtige Lackschicht aufgebracht werden, insbesondere um Oberflächeneigenschaften wie Glanz, Hochglanz oder Mattheit der Oberfläche einzustellen oder um Anti-Fingerprint-Eigenschaften zu schaffen. Der Lack wird bevorzugt als UV-Lack aufgebracht, meist in zwei bis drei Schichten, wobei bevorzugt bei mehrschichtigem Lackauftrag nach dem Aufbringen jeder Lackschicht die bereits aufgetragene Schicht angeliert wird. Nach dem Auftragen der letzten Lackschicht erfolgt das vollständige Aushärten der Lackschichten. Das Haften der Lackschicht auf dem Overlay kann optional verbessert werden, indem ein Primer auf das Overlay aufgetragen wird, bevor der Lack aufgetragen wird.

Ein typisches Beispiel für einen Lackauftrag auf ein Overlay erfolgt z. B. mittels eines wasserbasierten sogenannten Hydrolacks, z. B. eines UV-härtbaren Acryllacks. Eine erste Schicht des Lacks von 10 g/m² wird auf die Oberfläche des Overlays aufgetragen und angeliert. Diese Schicht wirkt als Haftvermittler zwischen dem Kunstharz des Overlays und den nachfolgenden Lackschichten. Um z. B. eine Lackbeschichtung mit einer gesamten Schichtdicke von 50 g/m² zu erreichen, werden auf die erste Schicht eine zweite Schicht mit 28 g/m² Hydrolack, gefolgt von zwei weiteren Schichten mit jeweils 6 g/m² Hydrolack aufgebracht. Nach jeder Schicht kann der aufgetragene Lack angeliert werden; nachdem sämtliche Schichten aufgetragen wurden, wird der aufgetragene Lack vollständig ausgehärtet. Der Lack kann auf beliebige Weise aufgetragen werden, durch Gießen, Sprühen, Walzen oder Rakeln.

Bevorzugt wird der Lackaufbau, meist in der letzten Schicht oder in den letzten beiden Schichten, mit Korund mit einem Durchmesser von bevorzugt 1 µm bis 5 µm ergänzt, um die Kratzfestigkeit der Lackoberfläche zu verbessern. Bevorzugt wird Korund in eine noch nicht ausgehärtete Lackschicht gestreut.

Die so als Laminat hergestellte, beschichtete Trägerplatte ist wasserfest und formstabil. Sie kann unter anderem verwendet werden als Boden-, Wand- oder Deckenbelag, als Konstruktionselement für den Innenausbau, als Konstruktionselement für den Außenbau, im Fahrzeugbau oder zur Gestaltung einer Fassade.

### Ausführungsbeispiel 4 - Trägerplatte mit aufkaschierter Lage aus PVC

Auf eine wie vorstehend im Ausführungsbeispiel 1 beschriebene Trägerplatte wird eine Lage PVC aufkaschiert. Zu diesem Zweck wird ein Klebstoff auf die Oberseite der Trägerplatte aufgetragen, z. B. in einer Menge von 60 g/m² bis 100 g/m². Zum Fixieren der Lage PVC können alle Schmelzklebstoffe eingesetzt werden; bevorzugt wird jedoch ein Schmelzklebstoff auf Polyurethan-Basis, der wasserfest ist. Eine Lage aus PVC, deren Außenseite mit einem Dekor versehen ist, wird mit der Innenseite auf den Klebstoff auf der Trägerplatte aufgelegt. Die Lage aus PVC ist üblicherweise zwischen 1 mm und 5 mm dick.

Der Stapel aus Trägerplatte, Klebstoff und PVC-Lage wird in einer Kaschierpresse unter Anwendung von Druck und meist erhöhter Temperatur verpresst, bis der Schmelzkleber im Wesentlichen seine Klebkraft entwickelt hat.

Eine mit PVC beschichtete Trägerplatte kann z. B. als wasserfestes Paneel für einen Bodenbelag eingesetzt werden, aber auch für Konstruktionen im Außenbau, z. B. für Fassaden oder Konstruktionselemente wie Trenn- oder Sichtschutzwände.

### Ausführungsbeispiel 5 - Trägerplatte mit Furnier

Eine erfindungsgemäße Trägerplatte wird entweder nur auf der Oberseite oder auf Ober- und Unterseite mit einem Furnier aus Eiche beschichtet. Wird nur auf der Oberseite ein Furnier aufgebracht, wird vorteilhaft ein Gegenzug auf der Unterseite aufgebracht, um ein Verformen der Platte zu verhindern.

Zwischen Furnier und Trägerplatte wird ein Klebstoff, der das Furnier durch seine klebende Wirkung fixiert, oder ein Bindemittel, hier bevorzugt ein teilvernetztes Bindemittel eingebracht. Das Bindemittel entwickelt keine Adhäsivkräfte wie ein Klebstoff, sondern bindet das Furnier durch Einwirken von Druck und Temperatur, indem es mechanisch in der Oberfläche der Trägerplatte und dem Furnier verankert wird, bzw. indem es chemische Bindungen mit der Oberfläche der Trägerplatte und dem Furnier eingeht.

Das teilvernetzte Bindemittel ist vorteilhaft ein Kunstharz, vorteilhaft ein Duroplast, insbesondere ein Aminoplast; bevorzugt weist das Bindemittel Melaminharz auf, z. B. als Melamin-Formaldehydharz. Das Bindemittel kann in einer Menge eingesetzt werden, die gerade ausreicht, das Furnier auf der Ober- bzw. Unterseite der Trägerplatte zu fixieren. Das Bindemittel kann optional in Form eines mit Bindemittel getränkten Papiers eingebracht werden. Das Bindemittel kann auf dem Furnier oder der Ober- bzw. Unterseite der Trägerplatte aufgetragen werden. Das Papier kann symmetrisch mit Bindemittel getränkt sein oder es kann ein Überschuss an Bindemittel auf mindestens einer Seite des Papiers aufgebracht sein.

Das Furnier wird mittels einer Presse auf der Trägerplatte fixiert. Wird Klebstoff zum Fixieren des Furniers eingesetzt, kann z.B. eine Vakuumpresse zum Fixieren eingesetzt werden, die bewirkt, dass der Klebstoff das Furnier auf der Trägerplatte befestigt. Das Furnier wird hier in der Regel nicht komprimiert. Wird kein Klebstoff sondern ein Bindemittel zum Fixieren des Furniers eingesetzt, kann z. B. eine Kurztaktpresse eingesetzt werden, in der das Kunstharz bei Temperaturen von 100 °C bis 240 °C und einem Druck von 25 N/mm² bis 50 N/mm² innerhalb von 20 Sekunden bis 60 Sekunden nachvernetzt, so dass es ausgehärtet ist. Dabei dringt das während des Nachvernetzens flüssige Kunstharz mindestens teilweise in das Furnier ein, optional, insbesondere wenn ein Überschuss an Bindemittel eingesetzt wird, dringt das Bindemittel mindestens abschnittsweise durch das Furnier hindurch. Nach einer bevorzugten Alternative wird so viel Bindemittel im Überschuss eingesetzt, dass das Kunstharz das Furnier vollständig durchdringt und die äußere Oberfläche der Beschichtung der Trägerplatte bildet. Bei dem genannten Druck wird das Furnier in der Regel auch komprimiert. Das Furnier ist bei Einsatz eines Bindemittels nach dem Verpressen druckfester und bietet eine weniger empfindliche Oberfläche als ein nicht komprimiertes Furnier.

Das Bindemittel wird zum Tränken des Papiers in flüssiger Form eingesetzt und nachfolgend in teilvernetztem Zustand getrocknet. Es kann alternativ auch teilweise in festem Zustand, z. B. als Pulver oder Staub, eingesetzt werden, das auf dem noch flüssigen, teilvernetzten Bindemittel haftet.

In gleicher Weise kann alternativ ein Polyurethan-Präpolymer zum direkten Auftrag auf die Oberfläche der Trägerplatte oder des Furniers eingesetzt werden. Wird das Furnier nachfolgend Licht ausgesetzt, wird ein aliphatisches Isocyanat als Polyurethan-Präpolymer bevorzugt; spielt ein Vergilben oder Verfärben keine Rolle, kann auch ein aromatisches Isocyanat als Polyurethan-Präpolymer eingesetzt werden. Furnier und Trägerplatte können unter den vorstehend genannten Pressbedingungen z. B. in einer Kurztaktpresse miteinander verpresst werden.

Auf die dem Furnier zugewandte Oberfläche des Bindemittels kann ein Additiv aufgetragen sein. Das Additiv kann z. B. Farbe, Leitfähigkeit oder Lichtechtheit beeinflussen.

Additive können auch in Kombination miteinander eingesetzt werden. Ist das Additiv auf die Oberfläche des Bindemittels aufgetragen, so wird das Additiv während des Nachvernetzens in der Presse durch das dann verflüssigte Bindemittel in dem Maße durch das Furnier gefördert, wie das Bindemittel das Furnier durchdringt. Auf diese Weise wird mit geringem Einsatz von Additiv eine maximale Wirkung erreicht.

Die so mit einem Furnier beschichtete Trägerplatte kann weiter beschichtet, insbesondere gegen Einfluss von Feuchtigkeit versiegelt werden, z. B. kann das Furnier lackiert werden.

Bildet das Bindemittel die Oberfläche der furnierten Trägerplatte oder wird nachfolgend eine Versiegelung zum Schutz gegen Feuchtigkeit aufgetragen, dann kann die wasserfeste Trägerplatte mit einer dekorativen, trotzdem wasserfesten Beschichtung in Feuchträumen eingesetzt werden, z. B. als Bodenbelag oder für Möbel, insbesondere Bad- oder Küchenmöbel oder zur Ausstattung von Saunen oder Schwimmbädern.

Allgemein ist zur Herstellung des plattenförmigen Werkstoffs Folgendes anzumerken: Eine kontinuierliche oder eine diskontinuierliche Presse, insbesondere eine Heißpresse wird bevorzugt zum Herstellen des plattenförmigen Werkstoffs eingesetzt. Die Presstemperatur beträgt vorteilhaft 100 C bis 220 °C, bevorzugt 110 °C bis 160 °C. Der Pressdruck beträgt vorteilhaft 0,3 N/mm² bis 5,5 N/mm², bevorzugt 1 N/mm² bis 3 N/mm². Die Pressdauer beträgt vorteilhaft 6 Sekunden/mm Plattendicke bis 60 Sekunden/mm Plattendicke, bevorzugt 10 Sekunden/mm Plattendicke bis 30 Sekunden/mm Plattendicke.

Allgemein ist Folgendes zum erfindungsgemäßen plattenförmigen Werkstoff festzuhalten: Als Zuschlagstoff sind bevorzugt keramische, synthetische oder Glaspartikel eingesetzt. Der plattenförmige Werkstoff weist bevorzugt Hydrophobierungsmittel auf, z. B. Paraffin oder Wachs. Auf eine Ober- und/oder Unterseite des plattenförmigen Werkstoffs ist vorteilhaft eine Beschichtung aufgebracht. Der plattenförmige Werkstoff weist natürliche Fasern, synthetische Fasern, anorganische oder organische Fasern oder Mischungen von Fasern auf.

**Tabelle 1, Teil 1**

| Bezeichnung | Nenndicke | Rohdicke | Rohbreite | Nettobreite | Pressdicke | Rohdichte | Vorschub | Pressfaktor | Faser atro | Bandwaagenfeuchte |
|---|---|---|---|---|---|---|---|---|---|---|
| | mm | mm | m | m | mm | kg/m³ | mm/s | s/mm | kg/m³ | % |
| Vergleichsbeispiel 1 | 4.3 | 4.6 | 2.14 | 2.07 | 4.7 | 1200 | 410 | 19.98 | 595.91 | 6.0 |
| Vergleichsbeispiel 2 | 4.3 | 4.6 | 2.14 | 2.07 | 4.7 | 1200 | 410 | 19.98 | 595.91 | 6.0 |
| Ausführungsbeispiel 1 | 4.3 | 4.6 | 2.14 | 2.07 | 4.7 | 1200 | 410 | 19.98 | 595.93 | 6.0 |

**Tabelle 1, Teil 2**

| Bezeichnung | MF-Harz bezogen auf atro Faser | | Ammoniumsulfat bezogen auf MF-Harz | | Paraffin bezogen auf atro Faser | | AS 2040 bezogen auf atro Faser | | Kaolin bezogen auf atro Faser | |
|---|---|---|---|---|---|---|---|---|---|---|
| | % | kg/m³ | % | kg/m³ | % | kg/m³ | % | kg/m³ | % | kg/m³ |
| Vergleichsbeispiel 1 | 105.00 | 625.71 | 2.00 | 12.51 | 5.00 | 29.80 | 0.00 | 0.00 | 0.00 | 0.00 |
| Vergleichsbeispiel 2 | 84.00 | 500.57 | 2.50 | 12.51 | 5.00 | 29.80 | 21.00 | 125.14 | 0.00 | 0.00 |
| Ausführungsbeispiel 1 | 58.55 | 348.89 | 3.58 | 12.49 | 5.00 | 29.80 | 21.00 | 125.14 | 25.45 | 151.69 |

## Patentansprüche

1. Verfahren zum Herstellen eines plattenförmigen Werkstoffs mit einer Dickenquellung, die, gemäß DIN 317, weniger als 5% bezogen auf die ursprüngliche Plattendicke beträgt, aufweisend lignocellulosische Fasern (5), die durch chemische oder physikalische Verfahren aus Pflanzen gewonnen wurden, und Bindemittel sowie Füllstoff, wobei als Bindemittel Melamin-, Formaldehyd-, Phenolharz, Methylendiphenylisocyanat (MDI), auch in emulgierter Form als eMDI, polymeres Diphenylmethandiisocyanat (PMDI), Polyurethan oder Mischungen der vorgenannten Bindemittel eingesetzt werden und wobei der Anteil des Bindemittels und des Füllstoffs mehr als 50 Gew.-% an dem plattenförmigen Werkstoff (1) beträgt, mit den Schritten:
a. Bereitstellen von lignocellulosischen Fasern (5),
b. Bereitstellen des Bindemittels, bevorzugt in flüssiger Form,
c. Bereitstellen des Füllstoffs,
d. Auftragen des Bindemittels und des Füllstoffs auf die Fasern (5),
e. Formen eines Faserkuchens aus den mit Bindemittel und Füllstoff versehenen Fasern (5),
f. Verpressen des Faserkuchens in einer Presse unter Aushärten des Bindemittels zum Erzeugen eines plattenförmigen Werkstoffs (1) mit einer Dicke von 3 mm bis 80 mm und mit einer Dichte zwischen 1.000 kg/m³ und 1.800 kg/m³.

2. Verfahren nach Anspruch 1, **dadurch gekennzeichnet, dass** als Füllstoff Silikate wie Aluminium- oder Magnesiumsilikat, Karbonate wie Magnesiumkarbonat oder Kalziumkarbonat, Metalloxide wie Titandioxid oder Aluminiumtrioxid, Metallhydroxide wie z. B. Aluminiumtrihydroxid, Bariumsulfat oder Calciumsulfatdihydrat sowie Mischungen der vorgenannten Füllstoffe eingesetzt werden.

3. Verfahren nach Anspruch 1 oder 2, **dadurch gekennzeichnet, dass** mindestens 1 Gew.-% und bis zu 30 Gew.-% Füllstoff, jeweils bezogen auf den plattenförmigen Werkstoff (1), eingesetzt werden.

4. Verfahren nach Anspruch 2, **dadurch gekennzeichnet, dass** Aluminium- oder Magnesiumsilikat in hydratisierter Form eingesetzt werden.

5. Verfahren nach einem der vorstehenden Ansprüche, **dadurch gekennzeichnet, dass** Bindemittel und Füllstoff gemischt werden, bevor sie den Fasern (5) zugesetzt werden.

6. Verfahren nach einem der vorstehenden Ansprüche, **dadurch gekennzeichnet, dass** ein elastifizierender Zusatz eingesetzt wird.

7. Verfahren nach Anspruch 6, wobei der elastifizierende Zusatz als Feststoff bezogen auf den Feststoff des Bindemittels in einem Verhältnis von maximal 1:1, bevorzugt von 0,7:1, insbesondere von 0,2:1, vorteilhaft von mindestens 0,01:1 eingesetzt wird.

8. Plattenförmiger Werkstoff mit einer Dickenquellung die, gemäß DIN 317, weniger als 5% bezogen auf die ursprüngliche Plattendicke beträgt, hergestellt nach dem Verfahren gemäß einem der Ansprüche 1 bis 7, aufweisend lignocellulosische Fasern (5), die durch chemische oder physikalische Verfahren aus Pflanzen gewonnen wurden, Bindemittel und Füllstoff, wobei der Anteil von Bindemittel und Füllstoff mehr als 50 Gew.-% des plattenförmigen Werkstoffs (1) beträgt, und wobei als Bindemittel Melamin-, Formaldehyd-, Phenolharz, Methylendiphenylisocyanat (MDI), auch in emulgierter Form als eMDI, polymeres Diphenylmethandiisocyanat (PMDI), Polyurethan oder Mischungen der vorgenannten Bindemittel eingesetzt sind, und wobei der plattenförmige Werkstoff eine Dicke von 3 mm bis 80 mm und eine Dichte von 1.000 kg/m³ bis 1.800 kg/m³ aufweist.

9. Plattenförmiger Werkstoff nach Anspruch 8, **dadurch gekennzeichnet, dass** als Füllstoff Silikate wie Aluminium- oder Magnesiumsilikat, Karbonate wie Magnesiumkarbonat oder Kalziumkarbonat, Metalloxide wie Titandioxid oder Aluminiumtrioxid, Metallhydroxide wie z. B. Aluminiumtrihydroxid, Bariumsulfat oder Calciumsulfatdihydrat sowie Mischungen der vorgenannten Füllstoffe eingesetzt sind.

10. Werkstoff nach Anspruch 8 oder 9, **dadurch gekennzeichnet, dass** der Werkstoff (1) einen elastifizierenden Zusatz, insbesondere ein Elastomer oder einen Thermoplasten aufweist.

11. Werkstoff nach Anspruchio, **dadurch gekennzeichnet, dass** als elastifizierender Zusatz Polyvinylacetat, Ethyl-Vinyl-Acetat, Acrylat, Styrolacrylat, Polyurethan, Mono- oder Diethylenglykol eingesetzt sind.

12. Werkstoff nach einem der Ansprüche 8 bis 11, **dadurch gekennzeichnet, dass** der Anteil an Bindemittel und Füllstoff bezogen auf atro Holz mehr als 101 Gew.-%, bevorzugt mehr als 120 Gew.-%, insbesondere mehr als 150 Gew.-%, vorteilhaft mehr als 200 Gew.-% beträgt.

13. Werkstoff nach einem der vorstehenden Ansprüche 8 bis 12 **dadurch gekennzeichnet, dass** Aluminium- oder Magnesiumsilikat in hydratisierter Form eingesetzt werden.

14. Werkstoff nach einem der vorstehenden Ansprüche 8 bis 13, **dadurch gekennzeichnet, dass** der plattenförmige Werkstoff (1) einen Zuschlagstoff aufweist, insbesondere nicht-hygroskopische oder nicht-quellende Zuschlagstoffe.

15. Verwendung eines plattenförmigen Werkstoffs nach mindestens einem der Ansprüche 8 bis 14, wobei der plattenförmige Werkstoff (1) mit einer Dickenquellung gemäß DIN 317 von bis zu 5%, bezogen auf die ursprüngliche Plattendicke sowie mit einer Dicke von 3 mm bis 80 mm und mit einer Dichte von 1.000 kg/m³ bis 1.800 kg/m³, eingesetzt wird im Innenausbau, insbesondere als Fußbodenplatte oder Fußbodenlaminat, als Wand- oder Deckenplatte, als Möbelplatte, beim Ausbau von Feucht- und Nassräumen, im Außenbau als Fassadenplatte oder zur Dacheindeckung, für Stallungen, für Terrassenbau einschließlich Terrassendielen oder Außenfußböden und Konstruktionen, insbesondere Möbel für den Außenbereich.

## Claims

1. Method of manufacturing a board-shaped material with a thickness swelling which, according to DIN 317, is less than 5% relative to the original board thickness, comprising lignocellulosic fibers (5) obtained from plants by chemical or physical methods, and binders and filler, wherein melamine resin, formaldehyde resin, phenolic resin, methylene diphenyl isocyanate (MDI), also in emulsified form as eMDI, polymeric diphenylmethane diisocyanate (PMDI), polyurethane or mixtures of the aforementioned binders are used as binders and wherein the proportion of the binder and the filler is more than 50 % by weight of the board-shaped material (1), comprising the steps of
a. Providing lignocellulosic fibers (5),
b. Providing the binder, preferably in liquid form,
c. Providing the filler,
d. Applying of the binder and the filler to the fibers (5),
e. Forming a fiber cake from the fibers provided with binder and filler (5),
f. Pressing of the fiber cake in a press while curing of the binder to manufacture a board-shaped material (1) with a thickness of 3 mm to 80 mm and a density of between 1,000 kg/m³ and 1,800 kg/m³.

2. Method according to claim 1, **characterized in that** silicates such as aluminium silicate or magnesium silicate, carbonates such as magnesium carbonate or calcium carbonate, metal oxides such as titanium dioxide or aluminium trioxide, metal hydroxides such as aluminium trihydroxide, barium sulphate or calcium sulphate dihydrate as well as mixtures of the aforementioned fillers are used as filler.

3. Method according to claim 1 or 2, **characterized in that** at least 1% by weight and up to 30% by weight of filler, in each case based on the board-shaped material (1), are used.

4. Method according to claim 2, **characterized in that** aluminium silicate or magnesium silicate is used in hydrated form.

5. Method according to one of the preceding claims, **characterized in that** binder and filler are mixed before they are added to the fibers (5).

6. Method according to one of the preceding claims, **characterized in that** an elasticizing additive is used.

7. Method according to claim 6, wherein the elasticizing additive is used as a solid relative to the solid of the binder in a ratio of at most 1:1, preferably of 0.7:1, in particular of 0.2:1, advantageously of at least 0.01:1.

8. Board-shaped material with a thickness swelling which, according to DIN 317, is less than 5% relative to the original board thickness, manufactured by the method according to one of claims 1 to 7, comprising lignocellulosic fibers (5) obtained from plants by chemical or physical processes, binder and filler, wherein the proportion of binder and filler is more than 50% by weight of the board-shaped material (1), and wherein melamine resin, formaldehyde resin, phenolic resin, methylene diphenyl isocyanate (MDI), also in emulsified form as eMDI, polymeric diphenylmethane diisocyanate (PMDI), polyurethane or mixtures of the aforementioned binders are used as binders, and wherein the board-shaped material has a thickness of 3 mm to 80 mm and a density of 1,000 kg/m³ to 1,800 kg/m³.

9. Board-shaped material according to claim 8, **characterized in that** silicates such as aluminium silicate or magnesium silicate, carbonates such as magnesium carbonate or calcium carbonate, metal oxides such as titanium dioxide or aluminium trioxide, metal hydroxides such as aluminium trihydroxide, barium sulphate or calcium sulphate dihydrate as well as mixtures of the aforementioned fillers are used as filler.

10. Material according to claim 8 or 9, **characterized in that** the material (1) comprises an elasticizing additive, in particular an elastomer or a thermoplastic.

11. Material according to claim 10, **characterized in that** polyvinyl acetate, ethyl vinyl acetate, acrylate, styrene acrylate, polyurethane, mono- or diethylene glycol are used as elasticizing additives.

12. Material according to any one of claims 8 to 11, **characterized in that** the proportion of binder and filler relative to atro wood is more than 101% by weight, preferably more than 120% by weight, in particular more than 150% by weight, advantageously more than 200% by weight.

13. Material according to one of the preceding claims 8 to 12, **characterized in that** aluminium silicate or magnesium silicate is used in hydrated form.

14. Material according to one of the preceding claims 8 to 13, **characterized in that** the board-shaped material (1) comprises an aggregate, in particular non-hygroscopic or non-swelling aggregates.

15. Use of a board-shaped material according to at least one of claims 8 to 14, wherein the board-shaped material (1) with a thickness swelling according to DIN 317 of up to 5%, based on the original board thickness, and with a thickness of 3 mm to 80 mm and with a density of 1,000 kg/m³ to 1.800 kg/m³, is used in interior construction, in particular as a floor panel or floor laminate, as a wall panel or ceiling panel, as a furniture panel, in the finishing of damp and wet rooms, in exterior construction as a facade panel or for roofing, for stables, for terrace construction including decking or exterior flooring and structures, in particular furniture for outdoor use.

## Revendications

1. Procédé de fabrication d'un matériau en forme de panneau avec un gonflement de l'épaisseur qui, selon la norme DIN 317, est inférieur à 5% par rapport à l'épaisseur originale du panneau, comprenant des fibres lignocellulosiques (5) obtenues à partir de plantes par des méthodes chimiques ou physiques, et des liants et des charges, dans lesquels la résine de mélamine, la résine de formaldéhyde, la résine phénolique, isocyanate de méthylène diphényle (MDI), également sous forme émulsifiée (eMDI), diisocyanate de diphénylméthane polymère (PMDI), polyuréthane ou mélanges des liants susmentionnés, et dans lequel la proportion du liant et de la charge est supérieure à 50 % en poids du matériau en forme de panneau (1), ce qui comprend les étapes suivantes
a. Fournir des fibres lignocellulosiques (5),
b. Fournir le liant, de préférence sous forme liquide,
c. Fournir le produit de remplissage,
d. Application du liant et de la charge sur les fibres (5),
e. Formation d'un gâteau de fibres à partir des fibres pourvues d'un liant et d'une charge (5),
f. Pressage du gâteau de fibres dans une presse avec le durcissement du liant pour fabriquer un matériau en forme de panneau (1) d'une épaisseur de 3 mm à 80 mm et d'une densité comprise entre 1 000 kg/m³ et 1 800 kg/m³.

2. Procédé selon la revendication 1, **caractérisé par** l'utilisation comme charge des silicates tels que le silicate d'aluminium ou le silicate de magnésium, de carbonates tels que le carbonate de magnésium ou le carbonate de calcium, d'oxydes métalliques tels que le dioxyde de titane ou le trioxyde d'aluminium, d'hydroxydes métalliques tels que le trihydroxyde d'aluminium, le sulfate de baryum ou le sulfate de calcium dihydraté, ainsi que de mélanges des charges susmentionnées.

3. Procédé selon la revendication 1 ou 2, **caractérisé par** l'utilisation d'au moins 1 % en poids et jusqu'à 30 % en poids de charge, dans chaque cas par rapport au matériau en forme de panneau (1).

4. Procédé selon la revendication 2, **caractérisé par le fait que** le silicate d'aluminium ou le silicate de magnésium est utilisé sous forme hydratée.

5. Procédé selon l'une des revendications précédentes, **caractérisé par le fait que** le liant et la charge sont mélangés avant d'être ajoutés aux fibres (5).

6. Procédé selon l'une des revendications précédentes, **caractérisé par** l'utilisation d'un additif élastifiant.

7. Procédé selon la revendication 6, dans lequel l'additif élastifiant est utilisé en tant que solide par rapport au solide du liant dans un rapport d'au plus 1:1, de préférence de 0,7:1, en particulier de 0,2:1, avantageusement d'au moins 0,01:1.

8. Matériau en forme de panneau avec un gonflement de l'épaisseur qui, selon la norme DIN 317, est inférieur à 5 % par rapport à l'épaisseur originale du panneau, fabriqué par le procédé selon l'une des revendications 1 à 7, comprenant des fibres lignocellulosiques (5) obtenues à partir de plantes par des procédés chimiques ou physiques, liant et charge, dans lequel la proportion de liant et de charge est supérieure à 50 % en poids du matériau en forme de panneau (1), et dans lequel la résine de mélamine, la résine de formaldéhyde, la résine phénolique, l'isocyanate de méthylène diphényle (MDI), également sous forme émulsifiée (eMDI), le diisocyanate de diphénylméthane polymère (PMDI), le polyuréthane ou des mélanges des liants susmentionnés sont utilisés comme liants, et dans lequel le matériau en forme de panneau a une épaisseur de 3 mm à 80 mm et une densité de 1 000 kg/m³ à 1 800 kg/m³.

9. Matériau en forme de panneau selon la revendication 8, **caractérisé par** l'utilisation comme charge de silicates tels que le silicate d'aluminium ou le silicate de magnésium, de carbonates tels que le carbonate de magnésium ou le carbonate de calcium, d'oxydes métalliques tels que le dioxyde de titane ou le trioxyde d'aluminium, d'hydroxydes métalliques tels que le trihydroxyde d'aluminium, le sulfate de baryum ou le sulfate de calcium dihydraté, ainsi que de mélanges des charges susmentionnées.

10. Matériau selon la revendication 8 ou 9, **caractérisé par le fait que** le matériau (1) comprend un additif élastifiant, notamment un élastomère ou un thermoplastique.

11. Matériau selon la revendication 10, **caractérisé par le fait que** l'acétate de polyvinyle, l'acétate d'éthyle vinyle, l'acrylate, l'acrylate de styrène, le polyuréthane, le mono- ou le diéthylène glycol sont utilisés comme additifs élastifiants.

12. Matériau selon l'une quelconque des revendications 8 à 11, **caractérisé par le fait que** la proportion de liant et de charge par rapport au bois atro est supérieure à 101% en poids, de préférence supérieure à 120% en poids, en particulier supérieure à 150% en poids, avantageusement supérieure à 200% en poids.

13. Matériau selon l'une des revendications précédentes 8 à 12, **caractérisé par le fait que** le silicate d'aluminium ou le silicate de magnésium est utilisé sous forme hydratée.

14. Matériau selon l'une des revendications précédentes 8 à 13, **caractérisé par le fait que** le matériau en forme de panneau (1) comprend un agrégat, en particulier des agrégats non hygroscopiques ou non gonflants.

15. Utilisation d'un matériau en forme de panneau selon au moins l'une des revendications 8 à 14, dans laquelle le matériau en forme de panneau (1) avec un gonflement de l'épaisseur selon DIN 317 jusqu'à 5%, par rapport à l'épaisseur originale du panneau, et avec une épaisseur de 3 mm à 80 mm et une densité de 1.000 kg/m³ à 1.800 kg/m³, est utilisé dans la construction intérieure, en particulier comme panneau de sol ou stratifié de sol, comme panneau de mur ou de plafond, comme panneau de meuble, dans la finition des pièces humides et mouillées, dans la construction extérieure comme panneau de façade ou pour la toiture, pour les écuries, pour la construction de terrasses, y compris les planchers et les structures extérieures, en particulier les meubles destinés à une utilisation extérieure.
